# EUROPEAN PATENT APPLICATION

(11) **EP 1 609 890 A1**
(43) Date of publication of application: **28.12.2005**
(21) Application number: 04102943.0
(22) Date of filing: 24.06.2004
(51) Int. Cl.: D01F 6/46, C08L 23/10

(54) **Polypropylene fibres**

(71) Applicant: Borealis Technology Oy, 06201 Porvoo (FI)
(72) Inventor: Broeders, Bert, 3550 Heusden (BE)
(74) Representative: VA TECH Patente GmbH & Co

(57) **Abstract**

Novel polypropylene fibres for high processing speeds, having good mechanical properties, a smaller diameter and a polypropylene composition from which the fibres are produced, are disclosed. The composition contains an amount of high-MFR modifier, which increases the maximum take up-speeds of fibres in the spinning process.

## Description

The invention relates to novel polypropylene fibres for higher processing speeds, having good mechanical properties and to a polypropylene composition from which the fibres are produced.

### Background of the invention

Today, polypropylene is widely used in many fibre and fabric applications. In the interest of economic productions it is desirable to produce polypropylene fibres with high output, i.e. high take-up speeds. Take-up speeds are however limited due to fibre break.

WO 00/28123 discloses nonwoven webs from bi-component fibres, where the first component is conventional polypropylene and the second component is a polypropylene which is different from the first one and includes high-MFR polypropylenes. The two polypropylenes are however not blended, but extruded separately, in order to make the fibres crimpable. Therefore, in each filament both polypropylenes coexist separately. This process is rather complicated and due to their peculiar composition the fibres are applicable for a limited number of purposes only.

### Object of the invention

It is therefore the object of the invention to provide polypropylene fibres which can be produced with higher production speeds. It is a further object of the invention that the fibres shall have mechanical properties comparable to or better than those of conventional fibres.

Surprisingly, the above object is achieved by a polypropylene fibre comprising 90 - 99.9 wt% of a polypropylene composition which comprises a propylene homopolymer and/or a propylene copolymer containing up to 30 wt% of at least one of ethylene and a C₄-C₈ α-olefin, and
- 10 wt% of a modifier polymer, which comprises a propylene homopolymer and/or a propylene copolymer containing up to 5 wt% of at least one of ethylene or a C₄-C₈ α-olefin, where the modifier polymer has an MFR > 100 g/10 min (230 °C, 2.16 kg) and where the MFR of the modifier polymer is higher than the MFR of the polypropylene composition.

Surprisingly, the addition of a small amount of high MFR modifier polymer significantly improves the processability, i.e. fibres according to the invention can be produced at significantly higher spinning speeds than conventional fibres which do not contain a modifier polymer. The fact that fibres can be produced with higher spinning speeds can be used for a higher throughput or for fibres having a smaller diameter or both.

Satisfactory results are achieved when the modifier polymer has an MFR > 100 g/10 min, preferably > 300 g/10 min, more preferably > 500 g/10 min, most preferably > 700 g/10 min (230 °C, 2.16 kg). The effect of the modifier polymer with high MFR may result from the observation that during extrusion, the low viscosity polymer flows to the surface, where it appears to be acting as a kind of "lubricant".

Preferably the MFR of the modifier polymer exceeds the MFR of the polypropylene composition by at least 100 g/10 min. More preferred is a difference of at least 300 g/10 min, still more preferred of at least 500 g/10 min, most preferred of at least 700 g/10 min.

Noticeable effects of the addition of high-MFR modifier polymer are already observed at a MFR difference of at least 100 g/10 min. With higher MFR differences the spinning speed can be further increased before fibre break occurs.

The amount of modifier polymer may vary within a broad range, i.e. from 0.1 to 10.0 wt%. While an effect of the addition of the modifier polymer is already noticeable at the lower end of the above concentration interval, it is preferred for the amount of modifier polymer to be at least 0.5 wt%, where the supposed "lubricating" effect is already more pronounced. At a modifier concentration above 10.0 wt% the influence of the features of the modifier polymer on the overall fibre characteristics is becoming too high. For most applications, the effect of addition of the modifier polymer is sufficiently pronounced with an amount of modifier of up to 5.0 wt%.

According to a more specific embodiment, an amount of 0.5 - 4.0 wt%, preferably of up to 3.0 wt%, of modifier is usually sufficient.

The kind of polymers used, i.e. whether they are homo- and/or copolymers, is not a critical issue. The base polymers which are used for fibre production may comprise propylene homopolymers, propylene copolymers or mixtures thereof. Likewise, the modifier polymer may comprise propylene homopolymers, propylene copolymers or mixtures thereof. The base polymer may be the same or different from the modifier polymer. If the base polymer comprises a propylene copolymer, it may contain up to 30 wt% of comonomer, preferably up to 20 wt% and most preferably up to 18 wt%.

Fibres according to the invention can be used for any type of fibre specific application, especially nonwoven fabrics, e.g. diapers, medical gowns and masks; woven fabrics, e.g. upholstery, clothing, ropes, twines and carpets.

A further aspect of the invention relates to a fibre forming polymer composition which comprises
90 - 99.9 wt% of a polypropylene composition which comprises a propylene homopolymer and/or a propylene copolymer containing up to 30 wt% of at least one of ethylene and a C₄-C₈ α-olefin, and
0.1 - 10 wt of a modifier polymer, which comprises a propylene homopolymer and/or a propylene copolymer containing up to 5 wt% of at least one of ethylene or a C₄-C₈ α-olefin, where the modifier polymer has an MFR > 100 g/10 min (230 °C, 2.16 kg) and where the MFR of the modifier is higher than the MFR of the polypropylene composition.

This fibre forming polymer composition is utilisable in the production of the polypropylene fibres according to the invention. The fibre forming polymer composition may be processed into fibres using conventional techniques, such as spin draw or melt spinning techniques. Monofilament or multifilament fibres may be produced.

### Description of Production of Propylene Polymers

The polymerisation process for the production of the propylene polymers according to the invention may be a continuous process or a batch process utilising known methods and operating in liquid phase, optionally in the presence of an inert diluent, or in gas phase or by mixed liquid-gas techniques. The process is preferably carried out in the presence of a stereospecific catalyst system.

As catalyst any ordinary stereospecific Ziegler-Natta catalysts can be used. An essential component in those catalysts are solid catalyst components comprising a titanium compound having at least one titanium-halogen bond, an internal electron donor compound and a magnesium halide in active form as a carrier for both the titanium component and the donor compound. The catalysts can contain - as internal electron donor - compounds selected from ethers, ketones, lactones, compounds containing N, P and/or S atoms and esters of mono and dicarboxylic acids.

A further essential component of the catalyst is an organoaluminium compound, such as an alkylaluminium compound. Additionally, an external electron donor is generally used.

To obtain the propylene polymer, it is preferred to use a polymerisation process based on at least one reactor and an optional second polymerisation step comprising at least one gas phase reactor.

Before the catalyst system is used in the actual polymerisation process it is optionally prepolymerised with small amounts of α-olefins in order to enhance catalyst performance and to improve the morphology of the end product.

In the first step of the process the optionally prepolymerised catalyst system and a monomer feed comprised of propylene, and optionally one or more of ethylene and C₄-C₈ α-olefins is fed into a reactor. The C₄-C₈ α-olefin can be any one or mixtures of 1-butene, 1-pentene, 4-methyl-1-pentene, 1-hexene, 1-heptene or 1-octene. Particularly preferred is 1-butene. The amount of propylene can be 60 to 100 wt%, the amount of comonomer can be up to 40 wt%.

Polymerisation can be carried out in the presence of the previously mentioned organoaluminium compound and an external donor compound at temperatures lower than 90 °C and pressures in the range of 10 to 90 bar, preferably 30 to 70 bar. The polymerisation is carried out in such conditions that 50 to 100 wt%, preferably 75 to 99 wt% of the end product is polymerised in the first reactor.

Any metallocene catalyst capable of catalysing the formation of a propylene polymer can also be used. A suitable metallocene catalyst comprises a metallocene/activator reaction product impregnated in a porous support at maximum internal pore volume. The catalyst complex comprises a ligand which is typically bridged, and a transition metal of group IVa ... VIa , and an organoaluminium compound. The catalytic metal compound is typically a metal halide.

In the first polymerisation step a polymer is produced, in which the content of comonomer is in the range of up to 18.0 wt%, preferably up to 10 wt%. Hydrogen is added, when desired, into the first reactor for adjusting the molecular weight of polymer, as conventional.

After the polymerisation is complete in the first reactor, the reaction medium is optionally transferred into a second reactor, which can be a gas phase reactor.

In the optional second reactor, 0 to 50 wt%, preferably 1 to 25 wt% of the final polymer is formed. In the second reactor the polymerisation can be carried out at a temperature of 60 to 90 °C and at a pressure higher than 5 bar, preferably higher than 10 bar. Optionally, propylene and other monomers can be added into the second reactor. Hydrogen can also be added into the gas phase reactor, if desired.

The precise control of the polymerisation conditions and reaction parameters is within the state of the art. After the polymerisation in the first and the optional second reactor is finished, the polymer product is recovered by conventional procedures.

The resulting polymer particles may be pelletised in a conventional compounding extruder with various additives, which are generally used in thermoplastic polymer compositions, such as stabilisers, antioxidants, acid neutralising agents, ultraviolet absorbers, antistatic agents, etc.

The above process description for producing the polymers used in the present invention is equally applicable to propylene homopolymers as well as propylene copolymers. One skilled in the art is aware of the various possibilities to produce propylene homo- and copolymers and will simply find out a suitable procedure to produce suitable polymers which are used in the present invention.

The high MFR modifier polymer can be added to the base polymer(s) by the polymer producer, preferably in the pelletising step or during the actual spinning process by means of a gravimetric or volumetric dosing system (cfr masterbatch dosing system). Dry blending of the different components before the actual spinning process is also an option.

It may also be possible to prepare the fibre forming polymer compositions by the use of multiple reactors operated in series, whereby the base polymer is formed in one or more reactors and the high MFR modifier polymer is prepared in another.

### Measurement methods

### MFR

The melt flow rates were measured with a load of 2.16 kg at 230 °C. The melt flow rate is that quantity of polymer in grams which the test apparatus standardised to ISO 1133 extrudes within 10 minutes at a temperature of 230 °C under a load of 2.16 kg.

### XCS

Xylene cold solubles were determined at 23 °C according ISO 6427. Xylene solubles are defined as the percent by weight that stays in solution after the polymer sample is dissolved in hot xylene and the solution is allowed to cool to 23 °C.

### Comonomer contents

Ethylene content in propylene polymer was measured by Fourier transmission infrared spectroscopy (FTIR). A thin film of the sample (thickness approximately 250 µm) was prepared by hot-pressing. The area of -CH2- absorption peak (800 - 650 cm-1) was measured with Perkin Elmer FTIR 1600 - spectrometer. The method was calibrated by ethylene content data measured by ¹³C NMR.

### Tenacity, Elongation

The mechanical properties of the fibres were determined on a Textechno Statimat M. according to ISO 5079. The gauge length used has been 100 mm for fibres and 200 mm for nonwoven, the speed was 100 m/min. The tensile test method which was used for nonwoven was Edana 20.2-89.

### Examples

### Base Materials

Polymer 1 (p1):PP-Homopolymer
   MFR (230 °C, 2.16 kg) = 26 g/10 min
   Additives: CAS no: 1592-23-0: 400 ppm, CAS no: 31570-04-4: 715 ppm, CAS no: 3896-11-5:
   290 ppm, CAS no: 181314-48-7: 290 ppm
Polymer 2 (p2): PP-Homopolymer
   MFR (230 °C, 2.16 kg) = 800 g/10 min
   Additives: CAS no: 1592-23-0: 300 ppm, CAS no: 6683-19-8: 1000 ppm
Polymer 3 (p3):
   PP-Homopolymer
   MFR (230 °C, 2.16 kg) = 1200 g/10 min
   Additives: CAS no: 1592-23-0: 300 ppm, CAS no: 6683-19-8: 1000 ppm
Polymer 4 (p4):
   Heterophasic copolymer with random copolymer matrix phase and ethylene-propylene rubber phase
   MFR (230 °C, 2.16 kg) = 7 g/10 min
   C2 in matrix: 4 wt%
   XCS: 30 wt%
   C2 in XCS: 15.5 wt%
   Additives: CAS no:11097-59-9: 300 ppm, CAS no: 6683-19-8: 333 ppm, CAS no:31570-04-4:
   667 ppm
Polymer 5 (p5): Polymer 5 was obtained by peroxide-induced degradation ("visbreaking") of polymer 4 in order to increase its MFR and to make it spinnable.
   Polymer 4 was compounded in a twin screw extruder at a temperature of 250°C. For visbreaking from the basic melt flow rate to a melt flow rate of about 25 g/10 min di-tert-butylperoxide was added during the compounding. The strands were quenched in cold water and pelletised.
   MFR (230 °C, 2.16 kg) = 26 g/10 min
   Additives: CAS no: 11097-59-9 300 ppm, CAS no: 6683-19-8: 333 ppm, CAS no: 31570-04-4: 667 ppm
Polymer 6 (p6): PP-Homopolymer
   MFR (230 °C, 2.16 kg) = 18 g/10 min
   Polymer 6 was obtained by peroxide-induced degradation of a propylene homopolymer.
   Start MFR (230 °C, 2.16 kg) before visbreaking = 1.9 g/10min
   Additives: CAS no: 1592-23-0: 400 ppm, CAS no :31570-04-4: 715 ppm, CAS no : 3896-11-5: 290 ppm, CAS no : 181314-48-7: 290 ppm

### Preparation of compositions for the examples

### Example 1 to 9 (Ex1 - Ex9)

Dry blends of base polymers (polymers 1, 5 and 6) with varying amounts of modifiers (polymers 2 and 3) were fed directly into a spinning line. The respective amounts of ingredients are shown in table 1.

### Comparative Examples 1 to 4 (CEx1 - CEx4)

Base polymers 1, 4, 5 and 6 were used for comparative examples 1 to 4.

### Spinning test

Spinning trials have been performed on a Fourné long spin pilot line. The spinneret used has 52 holes, each having a diameter of 0.5 mm. The throughput per hole has been kept constant at 0.3 g/hole·min.

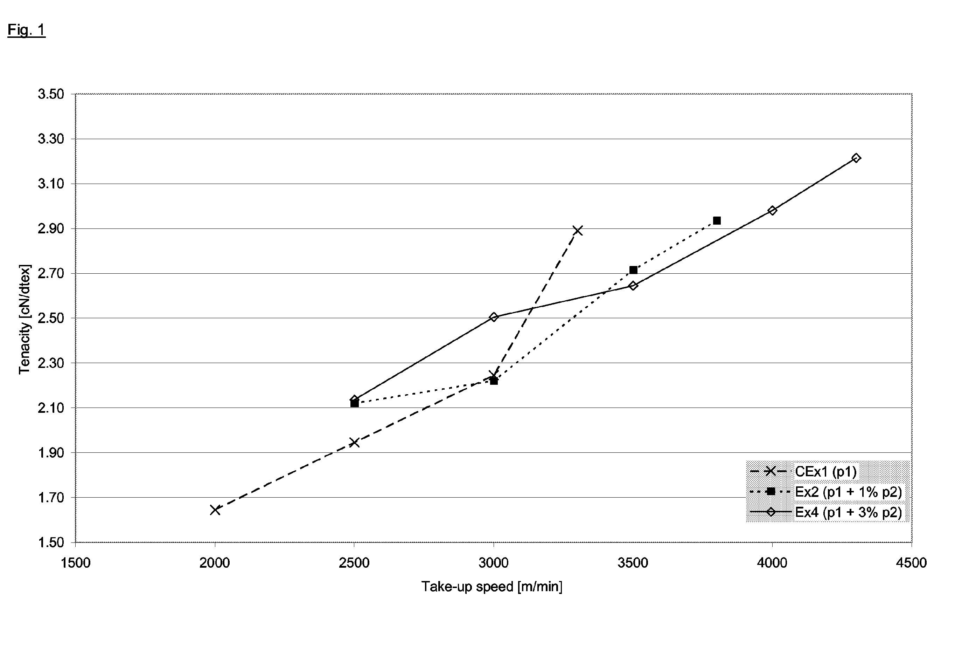

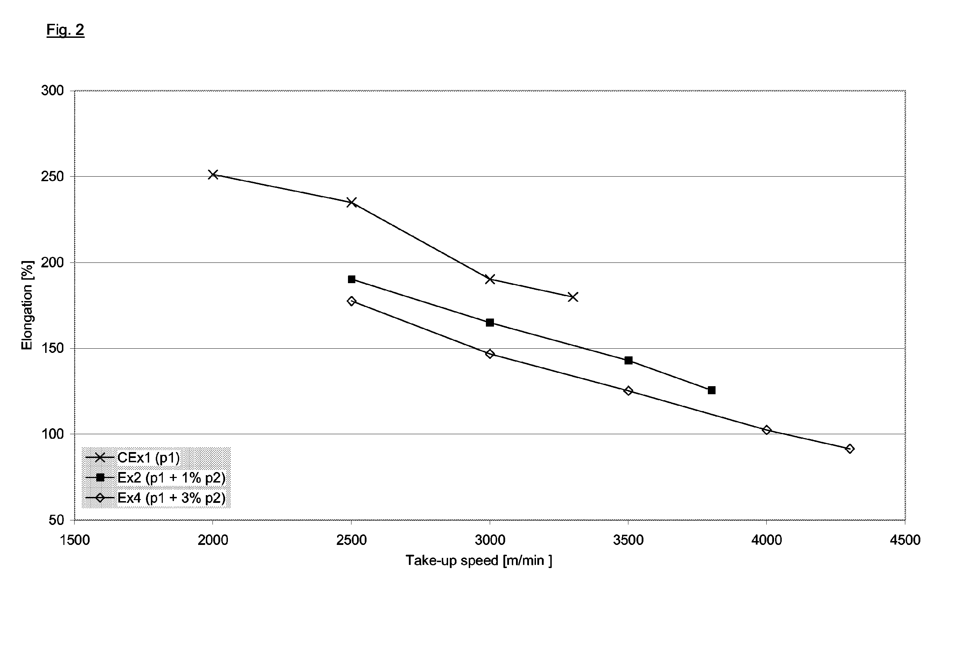

At a melt temperature of 235°C the take-up speed has been increased stepwise until fibre break. The data of the maximum take-up speeds are shown in table 1. Fibre samples have been taken and mechanical properties have been tested. The results can be seen in Fig. 1 and 2. In CEx2 the fibre spinning take-up rate was zero as it was not possible to produce fibres. The addition of 1 % p2 to p4 (Ex8) allows fibre formation at a standard rate.

### Spunbonded test

Spunbonded test has also been performed on a Fourné long spin pilot line. The spinneret used has 52 holes, each having a diameter of 0.5 mm. The fibre titer is kept constant (2 dtex)

At a melt temperature of 235°C the throughput and corresponding take-up speed have been increased stepwise until fibre break.

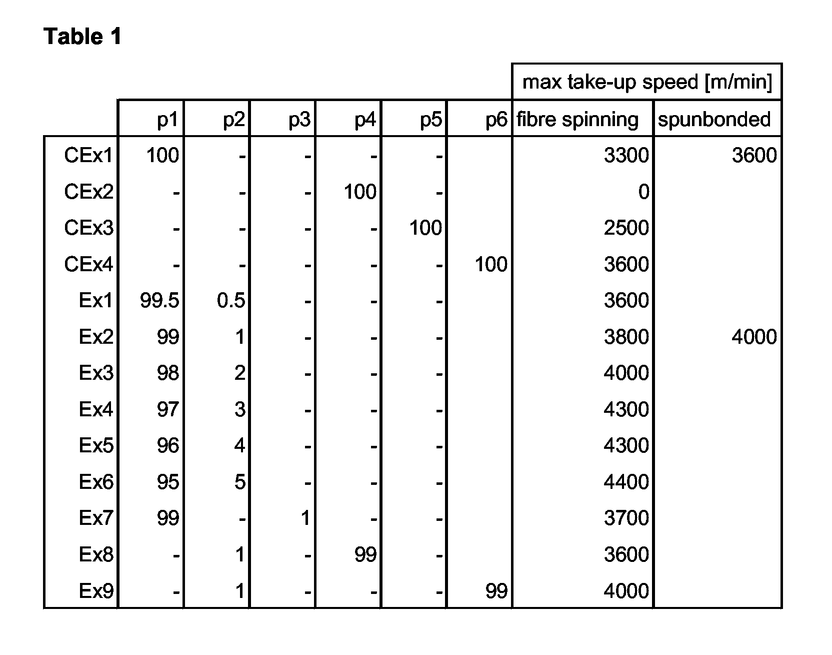

## Claims

1. Polypropylene fibre comprising
90 - 99.9 wt% of a polypropylene composition which comprises a propylene homopolymer and/or a propylene copolymer containing up to 30 wt% of at least one of ethylene and a C₄-C₈ α-olefin, and
0.1 - 10 wt% of a modifier polymer, which comprises a propylene homopolymer and/or a propylene copolymer containing up to 5 wt% of at least one of ethylene or a C₄-C₈ α-olefin, where the modifier polymer has an MFR > 100 g/10 min (230 °C, 2.16 kg) and where the MFR of the modifier is higher than the MFR of the polypropylene composition.

2. Polypropylene fibre according to claim 1, **characterised in that** the modifier polymer has an MFR > 300 g/10 min, preferably > 500 g/10 min, more preferably > 700 g/10 min.

3. Polypropylene fibre according to any one of claims 1 or 2, **characterised in that** the difference between the MFR of the modifier polymer and the MFR of the polypropylene composition is at least 100 g/10 min.

4. Polypropylene fibre according to any one of claims 1 to 3, **characterised in that** it comprises 0.5 - 5.0 wt% of the modifier polymer.

5. Polypropylene fibre according to any one of claims 1 to 4, **characterised in that** it comprises 0.5 - 4.0 wt%, preferably up to 3.0 wt% of the modifier polymer.

6. Articles comprising fibres according to any one of the preceding claims, especially nonwoven fabrics, e.g. diapers, medical gowns and masks; woven fabrics, e.g. upholstery, clothing, ropes, twines and carpets.

7. Fibre forming polymer composition for the production of polypropylene fibres according to any one of claims 1 to 5, comprising
90 - 99.9 wt% of a polypropylene composition which comprises a propylene homopolymer and/or a propylene copolymer containing up to 30 wt% of at least one of ethylene and a C₄-C₈ α-olefin, and
0.1 - 10 wt of a modifier polymer, which comprises a propylene homopolymer and/or a propylene copolymer containing up to 5 wt% of at least one of ethylene or a C₄-C₈ α-olefin, where the modifier polymer has an MFR > 100 g/10 min (230 °C, 2.16 kg) and where the MFR of the modifier is higher than the MFR of the polypropylene composition.
